# EUROPEAN PATENT SPECIFICATION

(11) **EP 4 456 274 B1**
(45) Date of publication and mention of the grant of the patent: **06.05.2026**
(21) Application number: 24171978.0
(22) Date of filing: 23.04.2024
(51) Int. Cl.: H01M 50/107, H01M 10/04, H01M 10/0587, H01M 50/152, H01M 50/169

(54) **CYLINDRICAL BATTERY, ELECTRIC APPARATUS AND MANUFACTURING METHOD FOR CYLINDRICAL BATTERY**
ZYLINDRISCHE BATTERIE, ELEKTRISCHE VORRICHTUNG UND HERSTELLUNGSVERFAHREN FÜR ZYLINDRISCHE BATTERIE
BATTERIE CYLINDRIQUE, APPAREIL ÉLECTRIQUE ET PROCÉDÉ DE FABRICATION DE BATTERIE CYLINDRIQUE

(30) Priority: 23.04.2023 CN 202320922089 U
(43) Date of publication of application: 30.10.2024
(73) Proprietor: Jiangsu Zenergy Battery Technologies Group Co., Ltd., Suzhou City, Jiangsu 215500 (CN)
(72) Inventor: YU, Hongjiang, Changshu Suzhou City, 215500 (CN); LUO, Zhigao, Changshu Suzhou City, 215500 (CN); CHEN, Jicheng, Changshu Suzhou City, 215500 (CN)
(74) Representative: Studio Torta S.p.A.

(56) References cited:
- WO-A1-2024/133407
- KR-A- 20220 155 017

## Description

### Cross-Reference to Related Application

The present invention claims priority to and the benefit of Chinese Patent Application No. 202320922089.1, filed with the China National Intellectual Property Administration (CHIPA) on April 23 2023.

### Technical Field

The present invention relates to the technical field of batteries, and in particular, to a cylindrical battery, an electric apparatus and a manufacturing method for a cylindrical battery.

### Background

In the related art, a welding position and a beading portion need to be reserved in a cylindrical battery, which causes the height of a battery housing to be increased, which means that when a battery is assembled into a battery module, more internal spaces need to be reserved for the battery module, and the energy density is significantly reduced.

KR20220155017A relates to a secondary battery, providing a secondary battery capable of reducing heat generation and improving safety by reducing a welding area. To this end, the present invention provides a secondary battery including: an electrode assembly having a first lug and a second lug disposed on an opposite side of the first lug; a first current collector soldered on the first wiring sheet of the electrode assembly and having a diameter greater than that of the electrode assembly; and a housing assembly including a housing accommodating the electrode assembly and the first current collector, a second current collector in close contact with the second lug of the electrode assembly, and a terminal unit electrically connected to the second current collector and penetrating the housing.

WO2024133407A1, which belongs to the state of the Art under Article 54(3) EPC, discloses a cylindrical secondary cell and methods for manufacturing the cylindrical secondary- cell. The cylindrical secondary cell includes a cylindrical can having a beading groove formed in a wall of the cylindrical can and arranged around the circumference of the cylindrical can, and a first conductive sheet, with first electrode coating, wound to form a jelly roll which is arranged in the cylindrical can, and wherein the first conductive sheet includes a portion free of first electrode coating which protrudes on a first end side of the jelly roll. The cylindrical secondary cell further includes a current collector disc which is electrically conductive and arranged at the first end side of the jelly roll and in direct contact with at least part of the portion free of first electrode coating of the first conductive sheet, wherein the current collector disc abuts the apex of the beading groove.

### Summary

The scope of the present invention is defined by the attached claims.

A technical problem to be solved by the present invention is to provide a cylindrical battery with a relatively low height, so as to reduce a space occupied by the cylindrical battery when the cylindrical battery is mounted into a battery module.

In order to solve the described technical problem, the present invention adopt the following technical solutions:
The present invention provides a cylindrical battery, including:
a housing, the housing is provided with an opening and an accommodating cavity for accommodating a cell; a first current collector, the first current collector is arranged in the accommodating cavity, and the first current collector includes a first main body portion and a second main body portion, the first main body portion is connected to the cell, and the second main body portion is connected to the housing; a side wall of the housing is provided with a beading portion, the beading portion is recessed towards the accommodating cavity to form a first groove on an outer wall of the housing, and correspondingly form a protrusion on an inner wall of the housing, at least a part of the second main body portion extends from an edge of the first main body portion to the protrusion and covers the protrusion.

According to the invention, the second main body portion includes a welding segment and a limiting segment, the limiting segment is connected to the welding segment and the first main body portion, and the second main body portion is connected to the protrusion by the welding segment. Specifically, before the beading portion is recessed towards the accommodating cavity, the second main body portion includes a welding segment and a buffer segment located between the welding segment and the first main body portion, the beading portion is arranged corresponding to the buffer segment, and the buffer segment has a cross-section shape that is zigzag and is able to be bent and deformed as the beading portion is recessed inwards; when the beading portion is recessed towards the accommodating cavity so that an inner side wall of the housing forms the protrusion correspondingly, the protrusion pushes the buffer segment such that the buffer segment is bent inwards and deformed to form the limiting segment. The protrusion and the limiting segment are integrally formed by a beading process, and no additional process is required to form the limiting segment so as to enable the limiting segment to be fitted and mounted.

In some embodiments, the welding segment is located on a side of the protrusion that is oriented towards the opening. The position of the welding segment is able to be directly subjected to laser welding, so that the welding segment is able to be fixedly connected to the protrusion.

In some embodiments, a length of the welding segment is less than a length of the limiting segment.

In some embodiments, the welding segment and the limiting segment abut against the protrusion. The limiting segment abutting against the protrusion is able to ensure a limiting and fixing effect, and the welding segment abutting against the protrusion is able to facilitate welding operations and welding effects.

In some embodiments, a cross section shape of the limiting segment is consistent with a cross section shape of the protrusion. The formed limiting segment has a shape consistent with that of the protrusion, which is able to further fix the first current collector.

In some embodiments, cross section shapes of the limiting segment and the protrusion are both V-shaped. A better limiting and fixing effect is able to be achieved by adopting the V-shaped forming shape.

According to the invention, a cross section shape of the buffer segment is zigzag. Between two points, the zigzag shape has a longer length than a straight line, thereby enabling a middle portion of the buffer segment to provide a sufficient length of deformation

In some embodiments, before the beading portion is recessed, an extension direction of the second main body portion is perpendicular to that of the first main body portion. The second main body portion is perpendicular to the first main body portion, so that the first current collector added with the buffer segment is able to be directly mounted into the accommodating cavity.

In some embodiments, the first main body portion and the second main body portion are integrally formed. Such arrangement enables the first main body portion and the deformed limiting segment and the welding segment to have reliable structural strength.

In some embodiments, further including: a top cover assembly, the top cover assembly covers the opening and includes a top cover and a first insulating seal; the top cover is embedded in the first insulating seal, such that the top cover is insulated from the housing.

In some embodiments, the first current collector is a negative electrode connector.

Some other embodiments of the present invention provide an electric apparatus, including the above cylindrical battery. The electric apparatus is a product such as a mobile phone, a watch, a vehicle, an electric toy, and an electric tool. Other specific structures of specific products thereof are similar to those in the related art, and will not be repeated herein again; and the main difference is that the cylindrical battery of the present invention is applied.

Still some other embodiments of the present invention further provide a manufacturing method for a cylindrical battery as claimed in claim 1, including the following steps:
S1: winding to form a cylindrical cell, the cylindrical cell has a positive electrode tab and a negative electrode tab;
S2: flattening the positive electrode tab and the negative electrode tab of the cylindrical cell;
S3: welding the positive electrode tab to a second current collector, and welding the negative electrode tab to a first current collector, so as to obtain a cell assembly;
S4: placing the cell assembly into a housing;
S5: performing ultrasonic torque welding on the second current collector and a positive electrode terminal;
S6: performing beading on the housing, such that a beading portion of the housing is recessed inwards, an outer wall of the housing is recessed to form a first groove, and an inner wall of the housing is protruded to form a protrusion, a top of the protrusion pushes the buffer segment such that the buffer segment is bent inwards and deformed to form a limiting segment;
S7: welding the welding segment to the protrusion on a surface of the protrusion away from the cell assembly; and
S8: mounting a top cover assembly, and mounting the top cover assembly to an opening of the housing in a clamping manner.

In some embodiments, before the step S1, the manufacturing method further includes steps of: die-cutting a positive electrode plate to form a plurality of positive electrode tabs, and die-cutting a negative electrode plate to form a plurality of negative electrode tabs.

In some embodiments, in the step S6, the limiting segment forms a second groove, and the protrusion abuts against the second groove to fix the protrusion and the limiting segment.

In some embodiments, in the step S6, the protrusion and the limiting segment both form V-shaped cross sections.

The cylindrical battery of the present invention has the following beneficial effects: the buffer segment is arranged corresponding to the beading portion of the housing, and when the cylindrical battery is subjected to a beading process, an inner wall of the beading portion protrudes such that the buffer segment is bent and deformed; at this time, the buffer segment stretches and is deformed, the welding segment is close to the protruding surface of the beading portion, and the welding segment is welded with and connected to the protruding surface of the beading portion. The welding positions are arranged corresponding to the beading portions, and two positions do not need to be reserved in the battery housing, thereby reducing the battery height.

### Brief Description of the Drawings

Fig. 1 is a schematic sectional diagram of a side structure of a cylindrical battery in the related art.
Fig. 2 is a schematic sectional diagram of a side structure of a cylindrical battery which is not subjected to a beading process and is not mounted with a top cover assembly of the present invention.
Fig. 3 is a schematic enlarged diagram of a partial structure of portion A in Fig. 2.
Fig. 4 is a schematic sectional diagram of a side structure of a cylindrical battery which is subjected to a beading process and is not mounted with a top cover assembly of the present invention.
Fig. 5 is a schematic enlarged diagram of a partial structure of portion B in Fig. 4.

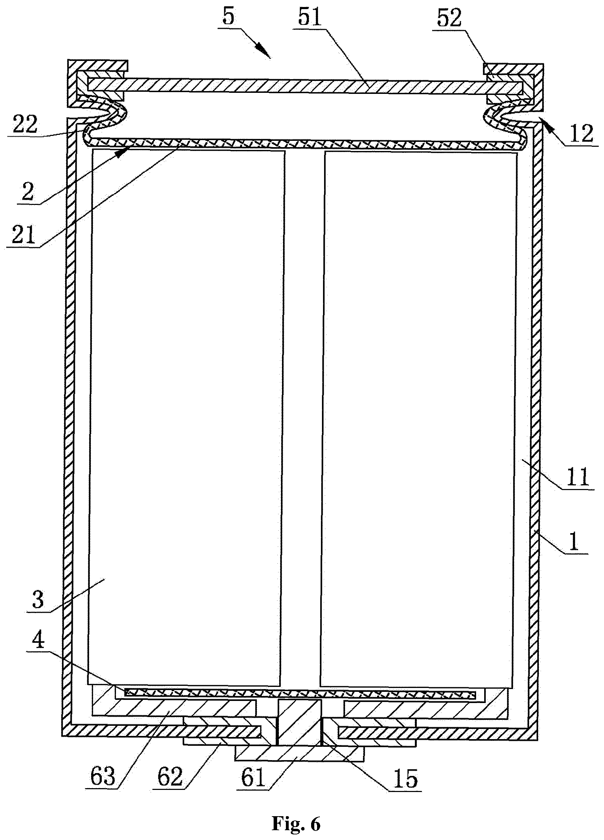

Fig. 6 is a schematic sectional diagram of a side structure of a cylindrical battery which is subjected to a beading process and is mounted with a top cover assembly of the present invention.

The reference signs are illustrated as follows:
1-housing; 11-accommodating cavity; 12-beading portion; 13-protrusion; 14-opening; 15-electrode terminal hole; 16-first groove; 17-boss; 2-first current collector; 21-first main body portion; 22-second main body portion; 23-buffer segment; 24-welding segment; 25-limiting segment; 3-cell; 4-second current collector; 5-top cover assembly; 51-top cover; 52-first insulating seal; 6-electrode terminal assembly; 61-electrode terminal; 62-second insulating seal; 63-insulating part; 7-second-polarity connecting plate; 71-welding position.

### Detailed Description of the Embodiments

To facilitate understanding by those skilled in the art, hereinafter, the present invention is further described in combination with embodiments, and the content mentioned in the embodiments is not intended to limit the present invention.

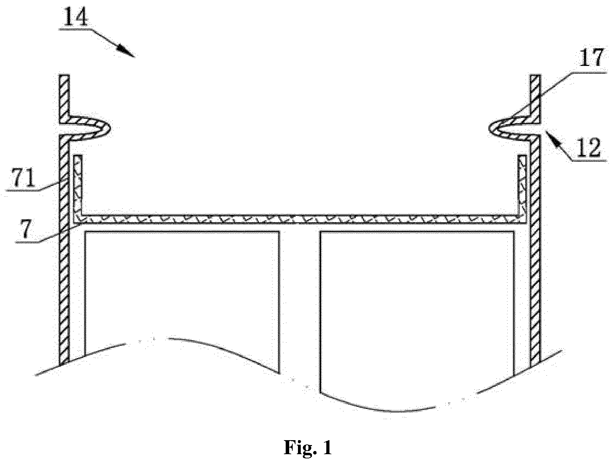

The inventor found that, in the existing cylindrical battery shown in Fig. 1, a first-polarity connecting plate is welded to a first-polarity tab, a second-polarity connecting plate is welded to a second-polarity tab, and then the first-polarity connecting plate is welded to a first-polarity electrode terminal, and a circumferential side wall of the second-polarity connecting plate 7 is welded to an inner side wall of a housing 1, specifically as shown in Fig. 1. A beading portion 12 protrudes inwards by a beading process to form a boss 17, a top cover assembly 51 (not shown in the figure) covers an opening 14 and is lapped on the boss 17, and the welding position 71 between the second-polarity connecting plate 7 and the side wall of the housing is located on a lower side of the boss 17. Hence, in the related art, the welding position 71 and the beading portion 12 need to be reserved, which increases the height of the housing of the battery; this means that when the battery is assembled into a battery module, the battery module needs to reserve more internal space.

### Embodiment 1:

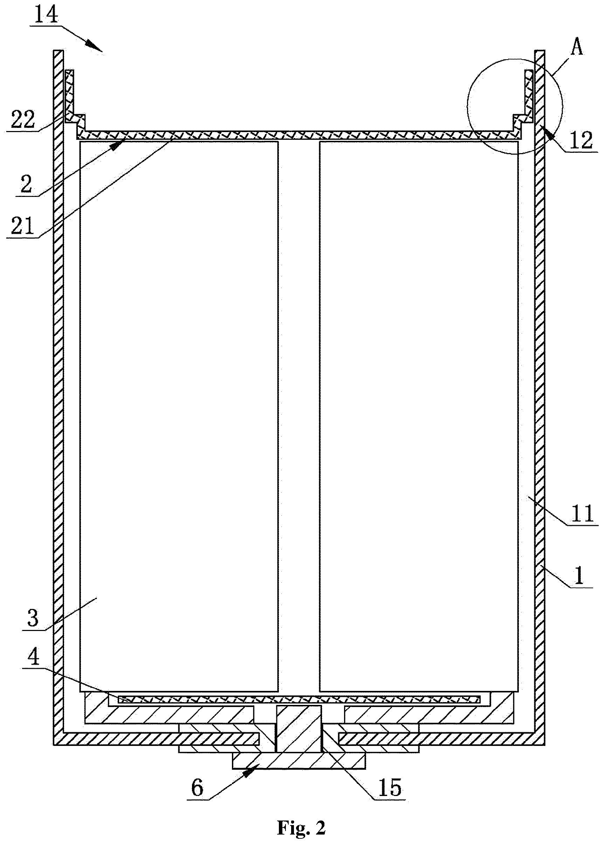

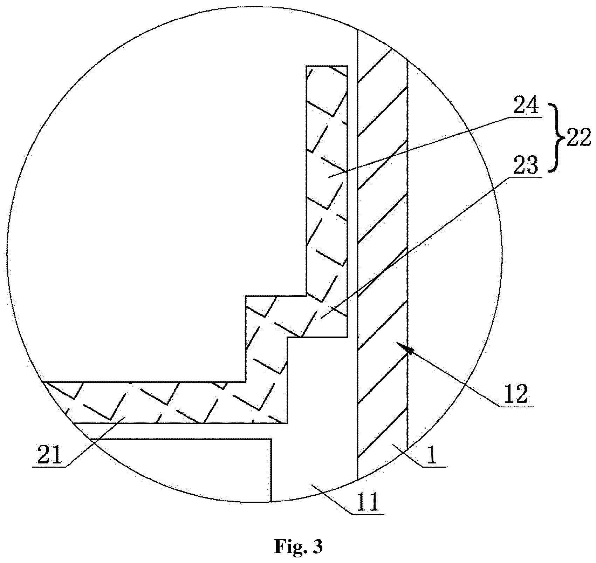

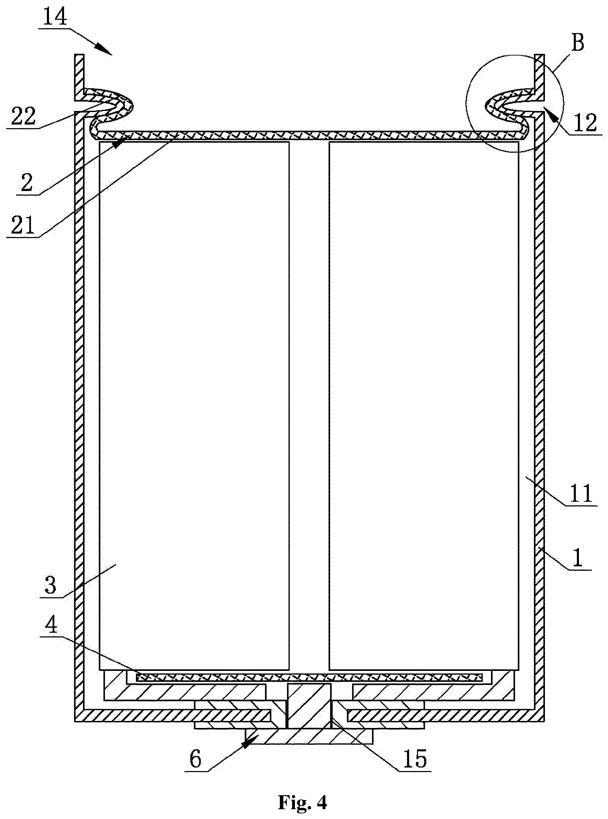

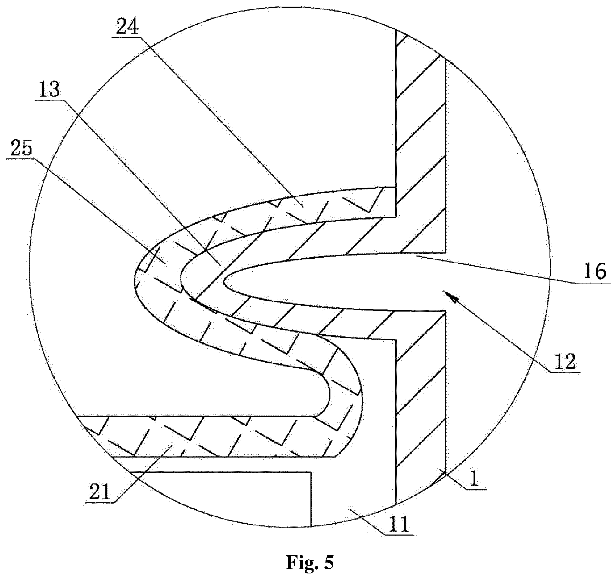

As shown in Figs. 2-5, a cylindrical battery includes a housing 1, an accommodating cavity 11 arranged in the housing 1, and an opening 14 and an electrode terminal hole 15 which are in communication with the accommodating cavity 11; a cell 3, and a first current collector 2 and a second current collector 4 respectively connected to two ends of the cell 3 are mounted in the accommodating cavity 11. The first current collector 2 is a negative electrode connector, the second current collector 4 is a positive electrode connector, the first current collector 2 faces the opening 14, the second current collector 4 faces the electrode terminal hole 15, and the housing 1 is made of a steel material.

The first current collector 2 includes a first main body portion 21 electrically connected to a tab by welding and a second main body portion 22 extending outwards from an edge of the first main body portion 21; the second main body portion 22 includes a buffer segment 23 and a welding segment 24, one end of the buffer segment 23 is connected to the first main body portion 21, and the other end of the buffer segment 23 is connected to the welding segment 24. A side wall of the housing 1 is provided with a beading portion 12 corresponding to the buffer segments 23. After the cylindrical battery is subjected to a beading process, the beading portion 12 of the housing 1 is recessed inwards to form a first groove 16 on an outer wall of the housing 1, and correspondingly form a protrusion 13 on an inner wall of the housing 1; and a top of the protrusion 13 pushes the buffer segment 23 such that the buffer segment 23 is bent and deformed to form a limiting segment 25; In this case, at least a part of the second main body portion 22 extends from an edge of the first main body portion 21 to the protrusion 13 and covers the protrusion 13. Cross section shapes of the protrusion 13 and the limiting segment 25 are both V-shaped, and the limiting segment 25 and the welding segment 24 abut against the protrusion 13.

The cylindrical battery further includes a top cover assembly 5 covering the opening 14 and an electrode terminal assembly 6 connecting to the second current collector 4; the top cover assembly 5 and the opening 14 are sealed by clamping, and the top cover assembly 5 includes a top cover 51 and a first insulating seal 52; the top cover 51 is embedded in the first insulating seal 52, and after clamping, the top cover 51 is insulated from the housing 1, a liquid injection port is provided at the central position of the top cover 51, and an annular weakened area is further provided on the top cover 51, the annular weakened area is configured for pressure relief when an internal pressure of the battery is excessively high. The electrode terminal assembly 6 includes an electrode terminal 61, a second insulating seal 62 and an insulating part 63, one end of the electrode terminal 61 is connected to the second current collector 4, and the other end of the electrode terminal 61 passes out through the electrode terminal hole 15; the second insulating seal 62 is arranged around an edge of the electrode terminal hole 15, the second insulating seal 62 abuts against the electrode terminal 61 to achieve sealing, and the insulating part 63 is arranged between the second insulating seal 62 and the second current collector 4.

In the embodiment, the welding segment 24 is located at one side of the protrusion 13 and faces towards the opening 14, and during welding, the welding is performed directly through the opening 14, which facilitates a welding operation. Moreover, the welding segment 24 abuts against an upper side surface of the protrusion 13, achieving a high welding yield. The upper side surface refers to a surface of one side of the protrusion 13 facing towards the opening 14.

In the embodiment, a length of the welding segment 24 is less than a length of the limiting segment 25. Such a design ensures that the limiting segment 25 has a sufficient length and is able to cover an end of the protrusion 13, thereby improving the limiting and fixing effect of the limiting segment 25 on the protrusion 13.

In the embodiment, an cross section shape of the buffer segment 23 is zigzag (for example, inverted-Z) and a length of an intermediate segment of the zigzag shape reserves a sufficient length for deformation while also providing a sufficient length for elongation when the welding segment 24 is welded, thereby ensuring release of the buffer segment 23.

Main steps of a manufacturing method of the cylindrical battery in this embodiment mainly include the following two types:
Type I:
   step 1: winding a cylindrical cell;
   step 2: flattening a positive electrode tab and a negative electrode tab;
   step 3: welding the positive electrode tab to the second current collector 4, and welding the negative electrode tab to the first current collector 2;
   step 4: mounting a cell assembly into a housing;
   step 5: performing ultrasonic torque welding on the second current collector 4 and a positive electrode terminal 61;
   step 6: performing beading on the housing 1, such that the beading portion 12 of the housing 1 is recessed inwards, an outer wall of the housing 1 is recessed to form a first groove 16, and an inner wall of the beading portion 12 is protruded to form a protrusion 13, a top of the protrusion 13 pushes the buffer segment 23 such that the buffer segment is bent and deformed to form a limiting segment 25, the protrusion 13 abuts against a second groove formed by the limiting segment 25, and the protrusion 13 is fixed to the limiting segment 25;
   step 7: welding the welding segment 24 to the protrusion 13 at an upper side surface of the protrusion 13; and
   step 8: mounting a top cover assembly 5, and performing clamping.
Type II:
   step 1: performing multi-tab die cutting on a positive electrode plate and a negative electrode plate;
   step 2: winding a cylindrical cell, and flattening a positive electrode tab and a negative electrode tab;
   step 3: welding the positive electrode tab to the second current collector 4, and welding the negative electrode tab to the first current collector 2;
   step 4: mounting a cell assembly into a housing;
   step 5: performing ultrasonic torque welding on the second current collector 4 and a positive electrode terminal 61;
   step 6: performing beading on the housing 1, such that the beading portion 12 of the housing 1 is recessed inwards, an outer wall of the housing 1 is recessed to form a first groove 16, and an inner wall of the beading portion 12 is protruded to form a protrusion 13, a top of the protrusion 13 pushes the buffer segment 23 such that the buffer segment is bent and deformed to form a limiting segment 25, the protrusion 13 abuts against a second groove formed by the limiting segment 25, and the protrusion 13 is fixed to the limiting segment 25;
   step 7: welding the welding segment 24 to the protrusion 13 at an upper side surface of the protrusion 13; and
   step 8: mounting a top cover assembly 5, and performing clamping.

In the cylindrical battery of the embodiment, by the beading process step, the beading portion 12 of the housing 1 is recessed inwards, the protrusion 13 formed by a protrusion of the inner wall of the beading portion 12 pushes the buffer segment 23 to be bent and deformed; at this moment, the buffer segment 23 is stretched and deformed, cross section shapes of the protrusion 13 and the limiting segment 25 are both V-shaped, and the welding segment 24 abuts against the upper side surface of the protrusion 13; subsequently, the welding segment 24 is directly welded to the upper side surface of the protrusion 13, the welding segment 24 is elongated during welding, the limiting segment 25 is connected to the welding segment 24, and the welding segment 24 has a sufficient length for elongation.

By arranging the buffer segment 23 in combination with the beading process step, beading is performed first and then welding is performed, so that the welding segment 24 is welded to a protruding surface of the beading portion 12, thereby improving the welding yield; moreover, the welding position is arranged corresponding to the beading portion 12, and two positions do not need to be reserved in the battery housing, thereby reducing the battery height. In addition, the arrangement of the buffer segment 23 greatly relieves the stress caused by welding and bending, and thus the first current collector 2 is able to be effectively prevented from cracking, so that the rigidity and stability of the structure at the welding positions are improved, and the use stability and durability of the cylindrical battery are ensured.

### Embodiment 2:

An electric apparatus, including the cylindrical battery; the electric apparatus is a vehicle, a mobile phone, a portable apparatus, a laptop, a ship, a spacecraft, an electric toy, an electric tool, and the like. The vehicle is a fuel vehicle, a gas vehicle or a new energy vehicle, and the new energy vehicle is a pure electric vehicle, a hybrid electric vehicle or an extended-range vehicle, etc.; the spacecraft includes an aircraft, a rocket, a space shuttle and a spaceship, etc.; the electric toy includes a stationary or mobile electric toy, such as a game machine, an electric vehicle toy, an electric ship toy, and an electric plane toy; and the electric tool includes a metal cutting electric tool, a grinding electric tool, an assembling electric tool and a railway electric tool, for example, an electric drill, an electric sander, an electric spanner, an electric screwdriver, an electric hammer, an electric hammer drill, a concrete vibrator and an electric planer, etc. The embodiments of the present invention do not specifically limit the described electric apparatus.

In the illustration of the present invention, it should be noted that for orientation words, e.g. terms like "center", "transverse direction (X)", "longitudinal direction(Y)", "vertical direction (Z)", "length", "width", "thickness", "upper", "lower", "front", "rear", "left", "right", "vertical", "horizontal", "top", "bottom", "inner", "outer", "clockwise", "counterclockwise" etc., they are used to indicate orientation and positional relationships and are based on the orientation or positional relationships as shown in the accompanying drawings, are only used to facilitate the illustration of the present invention and to simplify the illustration, rather than indicating or implying that a apparatus or element referred to must have a specific orientation, and be constructed and operated in the specific orientation, and therefore the terms cannot be understood as limitation to the specific scope of protection of the present invention.

In addition, terms such as "first" and "second" are used for purposes of description and cannot be understood as indicating or implying relative importance or significance or implicitly indicating the number of technical features. Thus, features defined by "first" and "second" may explicitly or implicitly include one or more of the features, and in the illustration of some embodiments of the present invention, the meaning of "a plurality of" is two or more, unless explicitly and specifically defined otherwise.

In the present invention, unless explicitly specified and defined otherwise, the terms such as "mount", "connect to", "connect" and "fix", etc. should be understood broadly, and for example, may be fixed connection, and may also be detachable connection, or integral connection; and may also be mechanical connection; may be direct connection, and may also be connection by means of an intermediate medium, and may also be interior communication between two elements. For a person of ordinary skill in the art, specific meanings of the described terms in the present invention could be understood according to specific situations.

The embodiments as described above merely represent embodiments of the present invention, and the illustration thereof is specific and detailed, but the specific and detailed illustration cannot be understood as limiting the patent scope of the present invention. It should be noted that for a person of ordinary skill in the art, and all these modifications and improvements fall within the scope of protection of the present invention. Therefore, the patent scope of protection of the present invention shall be subject to the appended claims.

## Claims

1. A cylindrical battery, comprising:
a housing (1), the housing (1) is provided with an opening (14) and an accommodating cavity (11) for accommodating a cell (3);
a first current collector (2), the first current collector (2) is arranged in the accommodating cavity (11), and the first current collector (2) comprises a first main body portion (21) and a second main body portion (22), the first main body portion (21) is connected to the cell (3), and the second main body portion (22) is connected to the housing (1);
a side wall of the housing (1) is provided with a beading portion (12), the beading portion (12) is recessed towards the accommodating cavity (11) to form a first groove (16) on an outer wall of the housing (1), and correspondingly form a protrusion (13) on an inner wall of the housing (1), at least a part of the second main body portion (22) extends from an edge of the first main body portion (21) to the protrusion (13) and covers the protrusion (13)
wherein the second main body portion (22) comprises a welding segment (24) and a limiting segment (25), the limiting segment (25) is connected to the welding segment (24) and the first main body portion (21), and the second main body portion (22) is connected to the protrusion (13) by the welding segment (24);.
wherein, before the beading portion (12) is recessed, the second main body portion (22) comprises the welding segment (24) and a buffer segment (23) located between the welding segment (24) and the first main body portion (21), and the buffer segment (23) is configured for being bent and deformed to form the limiting segment (25),
**characterized in that** a cross section shape of the buffer segment (23) is zigzag.

2. The cylindrical battery as claimed in claim 1, wherein the welding segment (24) is located on a side of the protrusion (13) that is oriented towards the opening (14).

3. The cylindrical battery as claimed in claim 1, wherein the welding segment (24) and the limiting segment (25) abut against the protrusion (13).

4. The cylindrical battery as claimed in claim 1, wherein a cross section shape of the limiting segment (25) is consistent with a cross section shape of the protrusion (13).

5. The cylindrical battery as claimed in claim 4, wherein cross section shapes of the limiting segment (25) and the protrusion (13) are both V-shaped.

6. The cylindrical battery as claimed in claim 1, wherein before the beading portion (12) is recessed, an extension direction of the second main body portion (22) is perpendicular to that of the first main body portion (21).

7. The cylindrical battery as claimed in claim 1, wherein the first main body portion (21) and the second main body portions (22) are integrally formed.

8. An electric apparatus, comprising the cylindrical battery as claimed in any one of claims 1 to 7.

9. A method for manufacturing the cylindrical battery as claimed in claim 1, comprising the following steps:
S1: winding to form a cylindrical cell (3), the cylindrical cell (3) has a positive electrode tab and a negative electrode tab;
S2: flattening the positive electrode tab and the negative electrode tab of the cylindrical cell (3);
S3: welding the positive electrode tab to a second current collector (4), and welding the negative electrode tab to a first current collector (2), so as to obtain a cell assembly;
S4: placing the cell assembly into a housing (1);
S5: performing ultrasonic torque welding on the second current collector (4) and a positive electrode terminal (61);
S6: performing beading on the housing (1), such that a beading portion (12) of the housing (1) is recessed inwards, an outer wall of the housing (1) is recessed to form a first groove (16), and an inner wall of the housing (1) is protruded to form a protrusion (13), a top of the protrusion (13) pushes the buffer segment (23) such that the buffer segment (23) is bent inwards and deformed to form a limiting segment (25);
S7: welding the welding segment (24) to the protrusion (13) on a surface of the protrusion (13) away from the cell assembly; and
S8: mounting a top cover assembly (5), and mounting the top cover assembly (5) to an opening (14) of the housing (1) in a clamping manner.

10. The method for manufacturing the cylindrical battery as claimed in claim 9, wherein before the step S1, the manufacturing method further comprises steps of: die-cutting a positive electrode plate to form a plurality of positive electrode tabs, and die-cutting a negative electrode plate to form a plurality of negative electrode tabs.

11. The method for manufacturing the cylindrical battery as claimed in claim 9, wherein in the step S6, the limiting segment (25) forms a second groove, and the protrusion (13) abuts against the second groove to fix the protrusion (13) and the limiting segment (25).

12. The method for manufacturing the cylindrical battery as claimed in claim 9, wherein in the step S6, the protrusion (13) and the limiting segment (25) both form V-shaped cross sections.

## Patentansprüche

1. Zylindrische Batterie, umfassend:
ein Gehäuse (1), wobei das Gehäuse (1) mit einer Öffnung (14) und einem Aufnahmehohlraum (11) zur Aufnahme einer Zelle (3) bereitgestellt wird;
einen ersten Stromkollektor (2), wobei der erste Stromkollektor (2) in dem Aufnahmehohlraum (11) angeordnet ist, und der erste Stromkollektor (2) einen ersten Grundkörperabschnitt (21) und einen zweiten Grundkörperabschnitt (22) umfasst, wobei der erste Grundkörperabschnitt (21) mit der Zelle (3) verbunden ist, und der zweite Grundkörperabschnitt (22) mit dem Gehäuse (1) verbunden ist;
eine Seitenwand des Gehäuses (1) mit einem Sickenabschnitt (12) bereitgestellt wird, der Sickenabschnitt (12) in Richtung des Aufnahmehohlraums (11) vertieft ist, um eine erste Nut (16) an einer Außenwand des Gehäuses (1) zu bilden und entsprechend einen Vorsprung (13) an einer Innenwand des Gehäuses (1) zu bilden, wobei sich mindestens ein Teil des zweiten Grundkörperabschnitts (22) von einem Rand des ersten Grundkörperabschnitts (21) zu dem Vorsprung (13) erstreckt und den Vorsprung (13) abdeckt,
wobei der zweite Grundkörperabschnitt (22) ein Schweißsegment (24) und ein Begrenzungssegment (25) umfasst, das Begrenzungssegment (25) mit dem Schweißsegment (24) und dem ersten Grundkörperabschnitt (21) verbunden ist, und der zweite Grundkörperabschnitt (22) durch das Schweißsegment (24) mit dem Vorsprung (13) verbunden ist;
wobei, bevor der Wulstabschnitt (12) vertieft ist, der zweite Grundkörperabschnitt (22) das Schweißsegment (24) und ein Puffersegment (23) umfasst, das zwischen dem Schweißsegment (24) und dem ersten Grundkörperabschnitt (21) angeordnet ist, und das Puffersegment (23) konfiguriert ist, um gebogen und verformt zu werden, um das Begrenzungssegment (25) zu bilden,
**dadurch gekennzeichnet, dass** eine Querschnittsform des Puffersegments (23) zickzackförmig ist.

2. Zylindrische Batterie nach Anspruch 1, wobei das Schweißsegment (24) auf einer Seite des Vorsprungs (13) angeordnet ist, die zur Öffnung (14) hin orientiert ist.

3. Zylindrische Batterie nach Anspruch 1, wobei das Schweißsegment (24) und das Begrenzungssegment (25) gegen den Vorsprung (13) anliegen.

4. Zylindrische Batterie nach Anspruch 1, wobei eine Querschnittsform des Begrenzungssegments (25) mit einer Querschnittsform des Vorsprungs (13) übereinstimmt.

5. Zylindrische Batterie nach Anspruch 4, wobei Querschnittsformen des Begrenzungssegments (25) und des Vorsprungs (13) beide V-förmig sind.

6. Zylindrische Batterie nach Anspruch 1, wobei vor dem Eindrücken des Sickenabschnitts (12) eine Erstreckungsrichtung des zweiten Grundkörperabschnitts (22) senkrecht zu derjenigen des ersten Grundkörperabschnitts (21) ist.

7. Zylindrische Batterie nach Anspruch 1, wobei der erste Grundkörperabschnitt (21) und die zweiten Grundkörperabschnitte (22) einstückig ausgebildet sind.

8. Elektrische Einrichtung, umfassend die zylindrische Batterie nach einem der Ansprüche 1 bis 7.

9. Verfahren zum Herstellen der zylindrischen Batterie nach Anspruch 1, umfassend die folgenden Schritte:
S1: Wickeln zum Bilden einer zylindrischen Zelle (3), wobei die zylindrische Zelle (3) eine positive Elektrodenlasche und eine negative Elektrodenlasche aufweist;
S2: Abflachen der positiven Elektrodenlasche und der negativen Elektrodenlasche der zylindrischen Zelle (3);
S3: Schweißen der positiven Elektrodenlasche an einen zweiten Stromkollektor (4) und Schweißen der negativen Elektrodenlasche an einen ersten Stromkollektor (2), um eine Zellenanordnung zu erhalten;
S4: Einsetzen der Zellenanordnung in ein Gehäuse (1);
S5: Durchführen von Ultraschall-Drehmoment-Schweißen an dem zweiten Stromkollektor (4) und einem positiven Elektrodenanschluss (61);
S6: Durchführen einer Sickenbildung an dem Gehäuse (1), derart, dass ein Sickenabschnitt (12) des Gehäuses (1) nach innen vertieft wird, eine Außenwand des Gehäuses (1) vertieft wird, um eine erste Nut (16) zu bilden, und eine Innenwand des Gehäuses (1) vorsteht, um einen Vorsprung (13) zu bilden, wobei eine Oberseite des Vorsprungs (13) das Puffersegment (23) drückt, derart, dass das Puffersegment (23) nach innen gebogen und verformt wird, um ein Begrenzungssegment (25) zu bilden;
S7: Schweißen des Schweißsegments (24) an den Vorsprung (13) auf einer Oberfläche des Vorsprungs (13) abgewandt von der Zellenanordnung; und
S8: Montieren einer oberen Abdeckungsanordnung (5) und Montieren der oberen Abdeckungsanordnung (5) an einer Öffnung (14) des Gehäuses (1) in einer klemmenden Weise.

10. Verfahren zum Herstellen der zylindrischen Batterie nach Anspruch 9, wobei vor dem Schritt S1 das Herstellungsverfahren ferner Schritte umfasst: Stanzen einer positiven Elektrodenplatte zur Bildung einer Vielzahl von positiven Elektrodenlaschen und Stanzen einer negativen Elektrodenplatte zur Bildung einer Vielzahl von negativen Elektrodenlaschen.

11. Verfahren zum Herstellen der zylindrischen Batterie nach Anspruch 9, wobei in dem Schritt S6 das Begrenzungssegment (25) eine zweite Nut bildet und der Vorsprung (13) gegen die zweite Nut anliegt, um den Vorsprung (13) und das Begrenzungssegment (25) zu fixieren.

12. Verfahren zum Herstellen der zylindrischen Batterie nach Anspruch 9, wobei in dem Schritt S6 der Vorsprung (13) und das Begrenzungssegment (25) beide V-förmige Querschnitte bilden.

## Revendications

1. Batterie cylindrique, comprenant :
un boîtier (1), le boîtier (1) est pourvu d'une ouverture (14) et d'une cavité de réception (11) destinée à recevoir une cellule (3) ;
un premier collecteur de courant (2), le premier collecteur de courant (2) est agencé dans la cavité de réception (11), et le premier collecteur de courant (2) comprend une première partie corps principal (21) et une seconde partie corps principal (22), la première partie corps principal (21) est reliée à la cellule (3), et la seconde partie corps principal (22) est reliée au boîtier (1) ;
une paroi latérale du boîtier (1) est pourvue d'une partie à nervure (12), la partie à nervure (12) est en retrait vers la cavité de réception (11) pour former une première rainure (16) sur une paroi externe du boîtier (1), et former de manière correspondante une saillie (13) sur une paroi interne du boîtier (1), au moins une partie de la seconde partie corps principal (22) s'étend d'un bord de la première partie corps principal (21) à la saillie (13) et recouvre la saillie (13)
dans laquelle la seconde partie corps principal (22) comprend un segment de soudage (24) et un segment de limitation (25), le segment de limitation (25) est relié au segment de soudage (24) et à la première partie corps principal (21), et la seconde partie corps principal (22) est reliée à la saillie (13) par le segment de soudage (24) ;.
dans laquelle, avant que la partie à nervure (12) ne soit en retrait, la seconde partie corps principal (22) comprend le segment de soudage (24) et un segment tampon (23) situé entre le segment de soudage (24) et la première partie corps principal (21), et le segment tampon (23) est conçu pour être plié et déformé pour former le segment de limitation (25),
**caractérisée en ce qu'**une forme de section transversale du segment tampon (23) est en zigzag.

2. Batterie cylindrique selon la revendication 1, dans laquelle le segment de soudure (24) est situé sur un côté de la saillie (13) qui est orienté vers l'ouverture (14).

3. Batterie cylindrique selon la revendication 1, dans laquelle le segment de soudure (24) et le segment de limitation (25) viennent en butée contre la saillie (13).

4. Batterie cylindrique selon la revendication 1, dans laquelle une forme de section transversale du segment de limitation (25) est cohérente avec une forme de section transversale de la saillie (13).

5. Batterie cylindrique selon la revendication 4, dans laquelle des formes de coupe transversale du segment de limitation (25) et de la saillie (13) sont toutes deux en forme de V.

6. Batterie cylindrique selon la revendication 1, dans laquelle, avant que la partie à nervure (12) ne soit en retrait, une direction d'extension de la seconde partie corps principal (22) est perpendiculaire à celle de la première partie corps principal (21).

7. Batterie cylindrique selon la revendication 1, dans laquelle la première partie corps principal (21) et les secondes parties corps principal (22) sont formées d'un seul tenant.

8. Appareil électrique, comprenant la batterie cylindrique selon l'une quelconque des revendications 1 à 7.

9. Procédé permettant de fabriquer la batterie cylindrique selon la revendication 1, comprenant les étapes suivantes :
S1 : l'enroulement pour former une cellule cylindrique (3), la cellule cylindrique (3) a une languette d'électrode positive et une languette d'électrode négative ;
S2 : l'aplatissement de la languette d'électrode positive et de la languette d'électrode négative de la cellule cylindrique (3) ;
S3 : le soudage de la languette d'électrode positive à un second collecteur de courant (4), et le soudage de la languette d'électrode négative à un premier collecteur de courant (2), de manière à obtenir un ensemble cellulaire ;
S4 : le placement de l'ensemble cellulaire dans un boîtier (1) ;
S5 : la réalisation d'un soudage par couple par ultrasons sur le second collecteur de courant (4) et sur une borne d'électrode positive (61) ;
S6 : la réalisation d'une nervure sur le boîtier (1), de telle sorte qu'une partie à nervure (12) du boîtier (1) est en retrait vers l'intérieur, une paroi externe du boîtier (1) est en retrait pour former une première rainure (16), et une paroi interne du boîtier (1) est en saillie pour former une saillie (13), un sommet de la saillie (13) pousse le segment tampon (23) de telle sorte que le segment tampon (23) est plié vers l'intérieur et déformé pour former un segment de limitation (25) ;
S7 : le soudage du segment de soudage (24) à la saillie (13) sur une surface de la saillie (13) éloignée de l'ensemble cellulaire ; et
S8 : le montage d'un ensemble couvercle supérieur (5), et le montage de l'ensemble couvercle supérieur (5) sur une ouverture (14) du boîtier (1) par serrage.

10. Procédé permettant de fabriquer la batterie cylindrique selon la revendication 9, dans lequel, avant l'étape S1, le procédé de fabrication comprend en outre les étapes consistant à : découper à l'emporte-pièce d'une plaque d'électrode positive pour former une pluralité de languettes d'électrode positive, et découper à l'emporte-pièce une plaque d'électrode négative pour former une pluralité de languettes d'électrode négative.

11. Procédé permettant de fabriquer la batterie cylindrique selon la revendication 9, dans lequel, à l'étape S6, le segment de limitation (25) forme une seconde rainure, et la saillie (13) vient en butée contre la seconde rainure pour fixer la saillie (13) et le segment de limitation (25).

12. Procédé permettant de fabriquer la batterie cylindrique selon la revendication 9, dans lequel, à l'étape S6, la saillie (13) et le segment de limitation (25) forment tous deux des sections transversales en forme de V.
